# EUROPEAN PATENT SPECIFICATION

(11) **EP 3 558 730 B1**
(45) Date of publication and mention of the grant of the patent: **08.03.2023**
(21) Application number: 17885250.5
(22) Date of filing: 05.12.2017
(51) Int. Cl.: B60J 3/00, B62D 35/00

(54) **AN ARRANGEMENT FOR A VISOR OF A VEHICLE**
ANORDNUNG FÜR EIN VISIER EINES FAHRZEUGES
SYSTÈME DE VISIÈRE DE VÉHICULE

(30) Priority: 21.12.2016 SE 1651708
(43) Date of publication of application: 30.10.2019
(73) Proprietor: Scania CV AB, 151 87 Södertälje (SE)
(72) Inventor: GLAV, Ragnar, 186 50 Vallentuna (SE); ISRAELSSON, Peter, 125 51 Älvsjö (SE); SKÖNNBRINK, Sara, 60218 Norrköping (SE); MERCIER, Guillaume, 112 67 Stockholm (SE); SELLIN, Thomas, 169 31 Solna (SE)
(74) Representative: Scania CV AB
(86) International application number: PCT/SE2017/051215
(87) International publication number: WO 2018/117935

(56) References cited:
- WO-A1-2015/064040
- AU-A1- 2010 246 521
- DE-A1- 4 035 729
- DE-A1-102007 041 274
- JP-A- H 092 339
- US-A- 5 664 871
- US-B1- 6 390 543
- US-B1- 6 530 620
- US-B1- 7 922 235

## Description

### TECHNICAL FIELD

The invention relates to an arrangement for a visor of a vehicle according to the preamble of claim 1. The invention also relates to a vehicle.

### BACKGROUND ART

Sun visors are arranged externally at an upper portion of a vehicle in connection to the windshield of the vehicle for providing a shaded area upon the windshield of the vehicle.

When the vehicle is in motion a relative flow of air against the vehicle will be created and passing said visor wherein noise such as a whistling noise may be created which is disturbing.

US5836640 discloses a sun visor mounted on the windshield of a truck where air holes are arranged in order to reduce turbulence and thereby also reduce created noise.

US7922235 and WO2015/064040 discloses arrangements with diffusor portions comprising recesses that are upwardly open.

There is however a need to provide an arrangement for a visor which reduces/eliminates such noise with low air resistance.

### OBJECTS OF THE INVENTION

An object of the present invention is to provide an arrangement for a visor of a vehicle which facilitates efficient noise reduction with low air resistance.

### SUMMARY OF THE INVENTION

These and other objects, apparent from the following description, are achieved by an arrangement and a vehicle as set out in the appended independent claim 1.

Preferred embodiments of the arrangement are defined in appended dependent claims.

Specifically an object of the invention is achieved by an arrangement with a visor of a vehicle. Said visor has a front side arranged to face away from the vehicle and a rear side facing the vehicle. Said visor is arranged to be mounted on an upper portion of the vehicle in connection to the windshield of the vehicle such that air is allowed to flow past said visor sides and thus between the visor and the vehicle. Said arrangement comprises means for reducing noise caused by said flow of air. According to the arrangement said means for reducing noise comprises a set of diffuser portions arranged along at least one of said visor sides so as to create an incoherence of said flow of air and consequently a noise reduction.

By thus providing a set of diffuser portions arranged along at least one of said visor sides so as to create an incoherence of said flow of air and consequently efficient noise reduction may be obtained without essentially affecting the air resistance of the visor. Thus, hereby a visor with efficient noise reduction and low air resistance is obtained. Such a set of diffuser portions arranged at a side of said visor affects a coherent air flow which may be caused by essentially parallel sides with even surfaces, such coherent air flow on occasions creating noise such as a whistling noise, the diffuser portions creating an incoherence of the air flow reducing the noise and essentially eliminating possible whistling noise. Such a set of diffuser portions may easily be applied to an existing visor, thus facilitating a cost efficient solution for reducing noise without essentially affecting air resistance of such an existing visor.

Said visor is configured to provide a shaded area upon the windshield of the vehicle when mounted.

According to the invention said set of diffuser portions are arranged along said rear side of said visor. By thus arranging set the diffuser portions along said rear side of said visor no external effects on the visor will occur. By thus arranging set the diffuser portions along said rear side of said visor the diffuser portions will not be visible when the visor is mounted on the vehicle and thus the external appearance of the mounted visor will not be affected.

According to an embodiment of the arrangement said set of diffuser portions are arranged along an upper portion of said rear side of said visor. By thus arranging said set of diffuser portions along an upper portion of said rear side of said visor the incoherence of said flow of air will be created in connection to the downstream side of the visor, i.e. where the flow of air is leaving the visor and where the flow of air on the respective side of the visor interacts, thus facilitating creating efficient incoherence and efficient noise reduction. According to an embodiment of the arrangement said visor is arranged to be mounted via at least two fastening members arranged at a distance from each other in the lateral direction of the vehicle, wherein said set of diffuser portions are arranged between said fastening members. By thus providing fastening members arranged at a distance from each other low air resistance is facilitated in that the flow of air may flow between said fastening members, and by arranging the set of diffuser portions between said fastening members the air resistance is not affected and the thus facilitated low air resistance may be maintained.

According to the invention at least some of said diffuser portions are arranged at different distances relative to each other along said visor. By thus arranging least some of said diffuser portions at different distances relative to each other along said visor efficient incoherence of the flow of air and thus efficient noise reduction may be obtained.

According to an embodiment of the arrangement at least some of said diffuser portions have different shapes compared to each other. By thus providing at least some of said diffuser portions with different shapes compared to each other efficient incoherence of the flow of air and thus efficient noise reduction may be obtained.

According to the invention said set of diffuser portions comprises diffuser portions being recesses in a visor side. By thus providing a set of diffuser portions in the shape of recesses in a visor side efficient incoherence of the flow of air and thus efficient noise reduction may be obtained. Diffuser portions in the shape of recesses in a visor side may be easily provided on an existing visor. By thus providing a set of diffuser portions in the shape of recesses in a visor side a weight reduction of the visor and thus the vehicle is obtained.

According to the invention said recesses are upwardly open. By thus providing said recesses in a visor side with a shape so that they are upwardly open efficient incoherence of the flow of air and thus efficient noise reduction may be obtained.

According to the invention at least some of said recesses are arranged at different distances relative to each other along said visor. By thus arranging least some of said recesses at different distances relative to each other along said visor efficient incoherence of the flow of air and thus efficient noise reduction may be obtained.

According to an embodiment of the arrangement at least some of said recesses have different shapes compared to each other. By thus providing at least some of said recesses with different shapes compared to each other efficient incoherence of the flow of air and thus efficient noise reduction may be obtained.

According to an embodiment of the arrangement at least some of said recesses have an upwardly widening configuration. By thus providing said recesses in a visor side with an upwardly widening configuration efficient incoherence of the flow of air and thus efficient noise reduction may be obtained.

According to an embodiment of the arrangement at least some of said recesses have upwardly widening side walls. Each side wall has according to an embodiment an angle relative to the vertical plane relative to the vertical plane. The total angle of the side walls is according to an embodiment in the range of 5 to 30 degrees, preferably in the range of 10-20 degrees. According to an embodiment of the arrangement said set of diffuser portions comprises diffuser portions being protrusions on a visor side. By thus providing a set of diffuser portions in the shape of protrusions on a visor side efficient incoherence of the flow of air and thus efficient noise reduction may be obtained. Diffuser portions in the shape of protrusions on a visor side may be easily provided on an existing visor.

According to a non-claimed embodiment of the arrangement said protrusions are arranged such that the space between said protrusion is upwardly open. Hereby efficient incoherence of the flow of air and thus efficient noise reduction may be obtained.

According to a non-claimed embodiment of the arrangement at least some of said protrusions are arranged at different distances relative to each other along said visor. Hereby efficient incoherence of the flow of air and thus efficient noise reduction may be obtained.

According to a non-claimed embodiment of the arrangement at least some of said protrusions have different shapes compared to each other. Hereby efficient incoherence of the flow of air and thus efficient noise reduction may be obtained.

According to a non-claimed embodiment of the arrangement at least some of said protrusions have an upwardly widening configuration. Hereby efficient incoherence of the flow of air and thus efficient noise reduction may be obtained.

According to an embodiment of the arrangement said visor has a comparatively even thickness in the range of 1 up to several centimetres, and wherein said diffuser portions have dimensions in comparatively the same range and wherein the distance between the respective diffuser portions are in comparatively the same range. By providing such dimensions of said diffuser portions relative to said thickness of the visor efficient incoherence of the flow of air and thus efficient noise reduction may be obtained.

The object of the invention is achieved by a visor comprising an arrangement a set out herein, said visor being configured to be arranged on a vehicle, said visor having a front side arranged to face away from the vehicle and a rear side facing the vehicle, said visor being arranged to be mounted on an upper portion of the vehicle in connection to the windshield of the vehicle such that air is allowed to flow past said visor sides and thus between the visor and the vehicle. Thus, the visor comprises an arrangement according to the invention comprising the above mentioned embodiments.

Specifically an object of the invention is achieved by a vehicle comprising an arrangement as set out herein.

### BRIEF DESCRIPTION OF THE DRAWINGS

For a better understanding of the present invention reference is made to the following detailed description when read in conjunction with the accompanying drawings, wherein like reference characters refer to like parts throughout the several views, and in which:
Fig. 1a schematically illustrates a side view of a vehicle according to the present invention;
Fig. 1b schematically illustrates a detail of the vehicle in fig. 1a with a visor according to an embodiment of the present invention;
Fig. 2 schematically illustrates a perspective view of a visor applied to an upper portion of a vehicle with an arrangement according to an embodiment of the present invention;
Fig. 3 schematically illustrates a rear view of the visor in fig. 2;
Fig. 4 schematically illustrates a rear view of a pair of diffuser portions of the visor in fig. 3;
Fig. 5a schematically illustrates a perspective view of the visor in fig. 2;
Fig. 5b schematically illustrates a plan view of the visor in fig. 2;
Fig. 6 schematically illustrates a plan view of a pair of diffuser portions of the visor in fig. 5b; and
Fig. 7 schematically illustrates a plan view of a visor applied to an upper portion of a vehicle with an arrangement not part of the present invention.

### DETAILED DESCRIPTION

Hereinafter the term "visor" refers to any suitable unit configured to be mounted to an upper portion of the vehicle in connection to the windshield of the vehicle and configured to provide a shaded area upon the windshield during sunshine in order to reduce the disturbance of sun for the driver and possible passenger of the vehicle. The term "visor" may also be denoted sun visor or windshield visor or sun protection device.

Hereinafter the term "diffusor portion" refers to any irregularity which when arranged along at least one of the sides of an element with two opposite sides such as a visor where air is allowed to flow past said opposite sides, e.g. visor sides, creates an incoherence of said flow of air and thereby reduces possible noise caused by said flow of air.

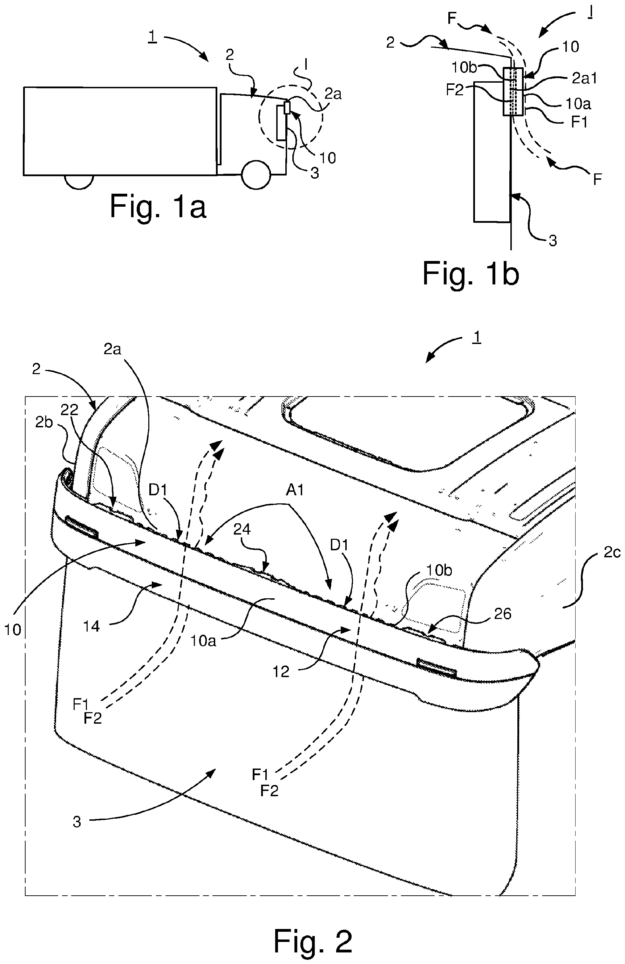

Fig. 1a schematically illustrates a side view of a vehicle 1 according to the present invention. The exemplified vehicle 1 is a heavy vehicle in the shape of a truck. The vehicle according to the present invention could be any suitable vehicle such as a truck, a bus or a car.

The vehicle 1 has a cab 2 with an upper portion 2a. The vehicle has a windshield 3. The windshield 3 is arranged at the front side of the cab 2. Said upper portion 2a of the cab 2 thus constitutes an upper portion 2a of the vehicle arranged in connection to the windshield 3.

The vehicle 1 comprises a visor 10 mounted on an upper portion of the vehicle 1 in connection to the windshield 3 of the vehicle 1. The visor 10 is thus arranged in connection to said upper portion 2a of the cab 2. The visor 10 is configured to provide a shaded area upon the windshield 3 of the vehicle 1.

Fig. 1b schematically illustrates a detail I of the vehicle in fig. 1a with the visor 10 according to an embodiment of the present invention.

The visor 10 has a front side 10a arranged to face away from the vehicle 1 and a rear side 10b facing the vehicle 1. The visor 10 is mounted on said upper portion 2a of the vehicle 1 in connection to the windshield 3 of the vehicle 1 such that flow of air F is allowed to flow past said visor sides 10a, 10b and thus between the visor 10 and the vehicle 1. Thus, a an air portion F1 of the flow of air F is allowed to pass on the front side 10a of the visor 10 and a portion F2 of the flow of air F is allowed to pass on the rear side 10b of the visor 10.

The visor 10 is thus arranged to be mounted in connection to said upper portion 2a so that at least a portion of said rear side 10b of the visor is arranged at a distance from a portion 2a1 of the upper portion 2a so that said portion F2 of the air flow is allowed to pass there between.

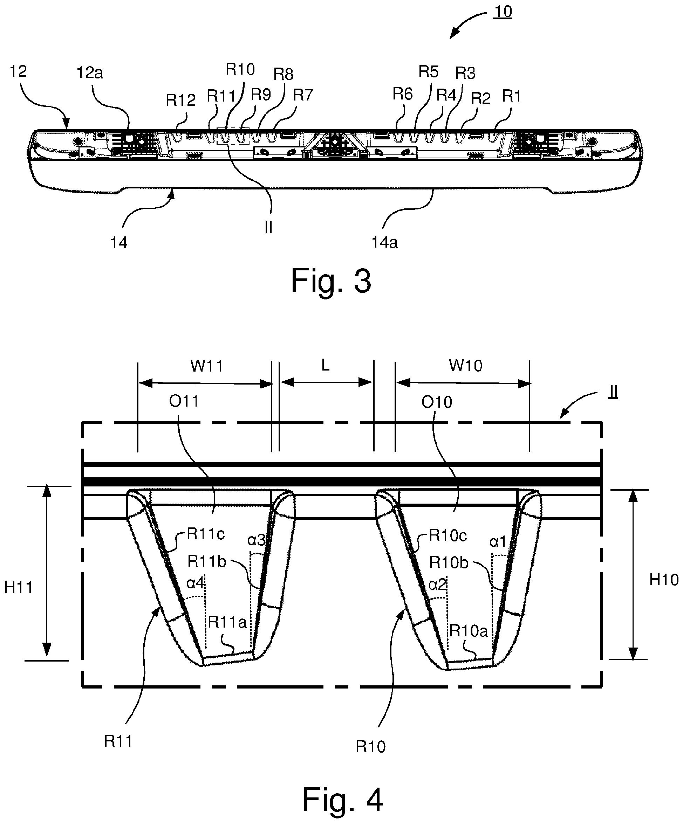

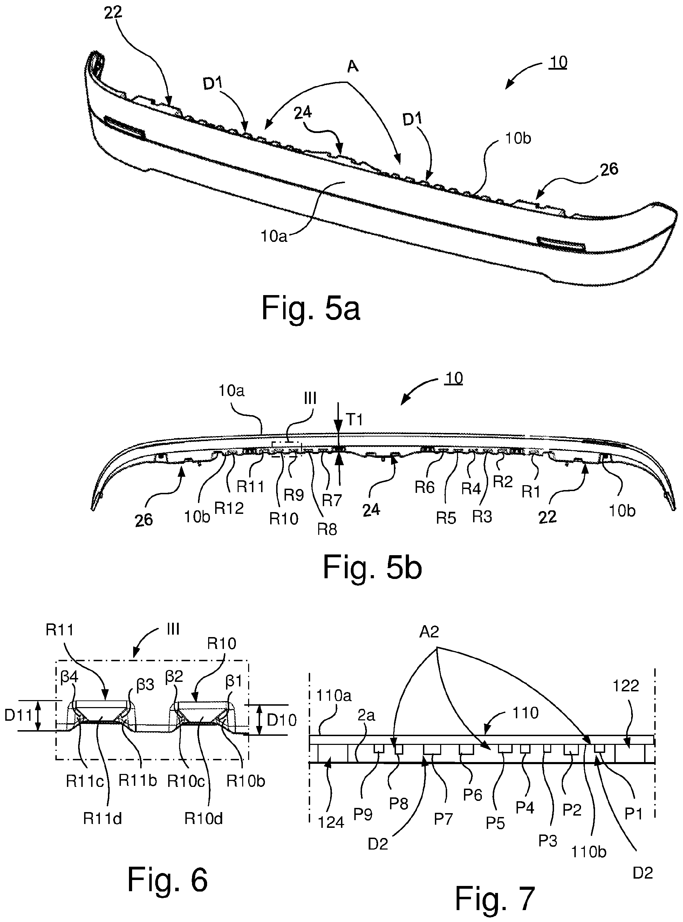

Fig. 2 schematically illustrates a perspective view of a visor 10 applied to an upper portion 2a of a vehicle 1 with an arrangement A1 according to an embodiment of the present invention; fig. 3 schematically illustrates a rear view of the visor in fig. 2; fig. 4 schematically illustrates a rear view of a pair of diffuser portions of the visor in fig. 3; fig. 5a schematically illustrates a perspective view of the visor in fig. 2; fig. 5b schematically illustrates a plan view of the visor in fig. 2.

The vehicle 1, here the cab 2 of the vehicle has an upper portion 2a and right and left side portions 2b, 2c. The vehicle 1, i.e. the cab 2 of the vehicle 1, has a windshield 3.

The visor 10 has an elongated shape. The visor 10 is mounted on said upper portion 2a of the vehicle 1 in connection to the windshield 3 of the vehicle 1. The visor 10 is mounted on said upper portion 2a so that the main direction of extension of the elongated visor 10 is transversal relative to the longitudinal extension of the vehicle 1. The visor 10 is thus transversely arranged in connection to said upper portion 2a of the cab 2. The visor 10 is configured to provide a shaded area upon the windshield 3 of the vehicle 1.

The visor 10 according to this embodiment has an upper mounting part 12 configured to be mounted to the vehicle 1, here the cab 2 of the vehicle 1 and hence the upper portion 2a of the vehicle 1. The visor further comprises a lower shading part 14 connectable to said upper part 12 and arranged to provide a shaded area upon the windshield 3 in the mounted state of the visor 10. The lower shading part 14 of the visor may be connected to the upper mounting part 12 with any suitable fastening means. The lower shading part 14 of the visor is according to an embodiment connectable to the upper mounting part 12 with a snap joint arrangement. According to an alternative embodiment the lower shading part constitutes an integrated portion of the visor 10.

Said upper mounting part 12 of the visor 10 has an upper portion 12a.

The visor 10 has a front side 10a arranged to face away from the vehicle 1 and a rear side 10b facing the vehicle 1 as described also with reference to fig. 1b. The visor 10 is mounted on said upper portion 2a of the vehicle 1 in connection to the windshield 3 of the vehicle 1 such that flow of air is allowed to flow past said visor sides 10a, 10b and thus between the visor 10 and the vehicle 1, as schematically illustrated in fig. 1b.

The visor 10 is thus arranged to be mounted in connection to said upper portion 2a so that at least a portion of said rear side 10b of the visor is arranged at a distance from a portion of the upper portion 2a so that a portion of the air flow is allowed to pass there between, as illustrated in fig. 1b.

According to this embodiment the visor 10 is arranged to be mounted via three fastening members 22, 24, 26 arranged at a distance from each other in the lateral direction of the vehicle 10.

Said fastening members 22, 24, 26 comprises a right fastening member 22 arranged in connection to a right portion of said upper portion 2a of the cab 2, an intermediate fastening member 24 arranged in connection to an intermediate portion of said upper portion 2a of the cab 2, and a left fastening member 26 arranged in connection to a left portion of said upper portion 2a of the cab 2. Said flow of air is thus allowed to flow between said right fastening member 22 and said intermediate fastening member 24 and between said left fastening member 26 and said intermediate fastening member 24.

Said fastening members 22, 24, 26 may be any suitable fastening members for attaching said visor to said upper portion 2a of the cab 2. Said fastening members 22, 24, 26 may comprises screw joints attached to said upper portion 2a. Each fastening member 22, 24, 26 comprises according to an embodiment a support member arranged to abut a portion of the upper portion 2a for supporting the visor 10.

The vehicle comprises an arrangement A1 for said visor 10. Said arrangement A1 comprises means for reducing noise caused by said flow of air allowed to flow past said visor sides 10a, 10b and thus between the visor 10 and a portion of said upper portion 2a.

Said means for reducing noise comprises a set D1 of diffuser portions arranged along said rear side 10b of said visor 10 so as to create an incoherence of said flow of air and consequently a noise reduction.

According to this embodiment of the arrangement A1 said set D1 of diffuser portions are arranged along the rear side 10b of the visor 10. Said set D1 of diffuser portions are arranged along an upper portion 12a of said rear side of said visor 10. Said set D1 of diffuser portions are arranged along said upper portion 12a of said mounting part 12, on the rear side of said visor 10.

Said set D1 of diffuser portions are described in more detail below with reference to fig. 3a-b, 4a-b, 5 and 6.

Said set D1 of diffuser portions are arranged between said right fastening member 22 and said intermediate fastening member 24 and between said left fastening member 26 and said intermediate fastening member 24.

According to the embodiment of the arrangement A1 described with reference to fig. 2, 3-4, 5a-b and 6 said set D1 of diffuser portions comprises diffuser portions being recesses R1, R2, R3, R4, R5, R6, R7, R8, R9, R10, R11, R12, hereinafter denoted R1-R12, in the rear visor side 10b as seen e.g. in fig. 3 and fig. 5b.

Thus, according to the embodiment of the arrangement A1 described with reference to fig. 2, 3-4, 5a-b and 6 said set D1 of diffuser portions comprises a set of recesses R1-R12.

Said set R1-R12 of recesses are arranged along the upper portion 12a of said rear side of said visor 10, and thus along said upper portion 12a of said mounting part 12, on the rear side of said visor 10 as illustrated in fig. 3.

Said set of recesses R1-R12 are arranged with a set of recesses R1-R6 between said right fastening member 22 and said intermediate fastening member 24 and a set of recesses R7-R12 between said left fastening member 26 and said intermediate fastening member 24 as illustrated in fig. 5b.

Said set of recesses R1-R12 are upwardly open, see e.g. fig. 3.

Fig. 4 schematically illustrates a rear view of a pair of diffuser portions of the visor 10 in fig. 3; and fig. 6 schematically illustrates a plan view of the same pair of diffuser portions of the visor in fig. 5b. Thus according to this embodiment fig. 4 schematically illustrates a rear view of a pair of recesses R10, R11 of the visor 10 and fig. 6 schematically illustrates a plan view of the same recesses R10, R11 of the visor 10.

According to this embodiment of the arrangement A1 said recess R10 is upwardly open with an opening O10 and said recess R11 is upwardly open with an opening O11.

According to this embodiment of the arrangement A1 said recesses R10, R11 have an upwardly widening configuration. Said recess R10 has a bottom portion R10a, see fig. 4, opposite side walls R10b, R10c as seen in fig. 4 and fig. 6, and a rear wall R10d as seen in fig. 6.

Said opposite side walls R10b, R10c are upwardly widening. The side wall R10b has an angle α1 relative to the vertical plane and the side wall R10c has an angle α2 relative to the vertical plane. The total angle α1+α2 may be any suitable angle. The total angle α1+α2 is according to an embodiment in the range of 5 to 30 degrees, preferably in the range of 10-20 degrees.

Said rear wall R10d is upwardly widening. The rear wall R10d has an angle β1 relative to the vertical plane in connection to the side wall R10b and an angle β2 relative to the vertical plane in connection to the side wall R10c. The angles β1 and β2 are according to an embodiment essentially the same. The angles β1 and β2 may be any suitable angle.

Said opposite side walls R11b, R11c are upwardly widening. The side wall R11b has an angle α3 relative to the vertical plane and the side wall R11c has an angle α4 relative to the vertical plane. The total angle α3+α4 may be any suitable angle. The total angle α3+α4 is according to an embodiment in the range of 5 to 30 degrees, preferably in the range of 10-20 degrees.

Said rear wall R11d is upwardly widening. The rear wall R11d has an angle β3 relative to the vertical plane in connection to the side wall R11b and an angle β4 relative to the vertical plane in connection to the side wall R11c. The angles β3and β4 are according to an embodiment essentially the same. The angles β3 and β4 may be any suitable angle.

Said recesses R10, R11 are arranged at a distance L from each other. According to this embodiment of the arrangement A1 at least some of said recesses R1-R12 are arranged at different distances relative to each other along said visor 10.

According to this embodiment of the arrangement A1 said visor 10 has a comparatively even thickness T1 in the range of centimetres, see fig. 5b. Said recesses R1-R12 have dimensions in comparatively the same range and the distance between the respective recess are in comparatively the same range.

Said recesses R1-R12 have a depth in the vertical direction, i.e. height, in comparatively the same range as the thickness T1 of the visor 10. As shown in fig. 4 the recess R10 has a height H10 and the recess R11 has a height H11, both in the range of a few centimetres.

Said recesses R1-R12 have a width in connection to the opening in comparatively the same range as the thickness T1 of the visor 10. As shown in fig. 4 the recess R10 has a width W10 and the recess R11 has a width W11, both in the range of a few centimetres.

Said recesses R1-R12 have a depth in the horizontal direction in comparatively the same range as the thickness T1 of the visor 10, here about a third of the thickness T1 of the visor 10. As shown in fig. 6 the recess R10 has a depth D10 and the recess R11 has a depth D11, both in the range of a few centimetres. Here the depth D10, D11 is smaller than the width W10, W11 and the height H10, H11.

Fig. 7 schematically illustrates a plan view of a visor 110 applied to an upper portion 2a of a vehicle with an arrangement A2 not part of the present invention. The vehicle may be any suitable vehicle, e.g. the vehicle described with reference to fig. 1a.

The visor 110 has an elongated shape. The visor 110 is mounted on said upper portion 2a of the vehicle 1 in connection to the windshield of the vehicle 1. The visor 110 is mounted on said upper portion 2a so that the main direction of extension of the elongated visor 110 is transversal relative to the longitudinal extension of the vehicle.

The visor 110 has a front side 110a arranged to face away from the vehicle and hence the upper portion 2a and a rear side 110b facing the vehicle and hence the upper portion 2a. The visor 110 is mounted on said upper portion 2a of the vehicle in connection to the windshield of the vehicle such that flow of air is allowed to flow past said visor sides 110a, 110b and thus between the visor 110 and the vehicle and hence the upper portion 2a, i.e. a portion of the upper portion 2a.

The visor 110 is thus arranged to be mounted in connection to said upper portion 2a so that at least a portion of said rear side 110b of the visor is arranged at a distance from a portion of the upper portion 2a so that a portion of the air flow is allowed to pass there between.

The visor 110 is arranged to be mounted via fastening members 122, 124 arranged at a distance from each other in the lateral direction of the vehicle. Said flow of air is allowed to flow between said right fastening members 122, 124. Said fastening members 122, 124 may be any suitable fastening members for attaching said visor to said upper portion 2a. Said fastening members 122, 124 may comprises screw joints attached to said upper portion 2a. Each fastening member 122, 124 comprises according to an embodiment a support member arranged to abut a portion of the upper portion 2a for supporting the visor 110.

The vehicle comprises an arrangement A2 for said visor 110. Said arrangement A2 comprises means for reducing noise caused by said flow of air allowed to flow past said visor sides 110a, 110b and thus between the visor 110 and a portion of said upper portion 2a.

Said means for reducing noise comprises a set D2 of diffuser portions arranged along said rear side 110b of said visor 110 so as to create an incoherence of said flow of air and consequently a noise reduction.

According to this embodiment of the arrangement A2 said set D2 of diffuser portions are arranged along the rear side 110b of the visor 110. Said set D2 of diffuser portions are arranged along an upper portion of said rear side of said visor 110. Said set D2 of diffuser portions are arranged between said fastening members 122, 124.

According to the embodiment of the arrangement A2 described with reference to fig. 2, 3-4, 5a-b and 6 said set D2 of diffuser portions comprises diffuser portions being protrusions P1, P2, P3, P4, P5, P6, P7, P8, P9, hereinafter denoted P1-P9, in the rear visor side 110b. Thus, according to the embodiment of the arrangement A2 said set D2 of diffuser portions comprises a set of protrusions P1-P9.

Said set P1-P9 of protrusions is arranged along the upper portion of said rear side 110b of said visor 110.

According to this embodiment of the arrangement A2 said visor 110 has a comparatively even thickness T2 which is relatively smaller than the thickness T1 of the visor 10 described above, the visor 110 having a thickness T2 in the range of e.g. about a centimetre. Said protrusions P1-P9 have dimensions in comparatively the same range and the distance between the respective protrusions is in comparatively the same range as the thickness T2 of the visor 110.

Said protrusions P1-P9 have a depth in the vertical direction, i.e. height, in comparatively the same range as the thickness T2 of the visor 110, the height not shown in fig. 7. Said protrusions P1-P9 have a width in comparatively the same range as the thickness T1 of the visor 110. Said protrusions P1-P9 have a projection in the horizontal direction in comparatively the same range as the thickness T1 of the visor 110.

According to an embodiment of the arrangement A2 said protrusions P1-P9 are arranged such that the space between said protrusion is upwardly open. According to an embodiment of the arrangement A2 at least some of said protrusions P1-P9 are arranged at different distances relative to each other along said visor. According to an embodiment of the arrangement A2 at least some of said protrusions P1-P9 have different shapes compared to each other. According to an embodiment of the arrangement A2 at least some of said protrusions P1-P9 have an upwardly widening configuration.

The foregoing description of the preferred embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention as defined by the appended claims, for various embodiments and with the various modifications as are suited to the particular use contemplated.

## Claims

1. An arrangement (A1; A2) with a visor (10; 110), said visor (10; 110) being configured to be arranged on a vehicle (1), said visor (10; 110) having a front side (10a, 110a) arranged to face away from the vehicle and a rear side (10b; 110b) facing the vehicle (1), said visor (10; 110) being arranged to be mounted on an upper portion (2a) of the vehicle (1) in connection to the windshield (3) of the vehicle (1) such that air (F1, F2) is allowed to flow past said visor sides (10a; 110a, 10b; 110b) and thus between the visor (10; 110) and the vehicle, said arrangement comprising means for reducing noise caused by said flow of air (F1, F2), **characterized in that** said means for reducing noise comprises a set (D1; D2) of diffuser portions (R1-R12; P1-P9) arranged along at least one of said visor sides (10a; 110a, 10b; 110b) so as to create an incoherence of said flow of air (F1, F2) and consequently a noise reduction, wherein said set (D1; D2) of diffuser portions (R1-R12; P1-P9) comprises diffuser portions being recesses (R1-R12) in a visor side and said recesses (R1-R12) are upwardly open, wherein said set of diffuser portions (R1-R12; P1-P9) are arranged along said rear side (10b; 110b) of said visor (10; 110) and at least some of said recesses (R1-R12) are arranged at different distances relative to each other along said visor (10).

2. An arrangement according to claim 1, wherein said set (D1; D2) of diffuser portions (R1-R12; P1-P9) are arranged along an upper portion (12a) of said rear side of said visor.

3. An arrangement according to any of claims 1-2, wherein said visor (10; 110) is arranged to be mounted via at least two fastening members (22, 24, 26; 122, 124) arranged at a distance from each other in the lateral direction of the vehicle (1), wherein said set (D1; D2) of diffuser portions (R1-R12; P1-P9) are arranged between said fastening members (22, 24, 26; 122, 124).

4. An arrangement according to claim 1-3, wherein at least some of said recesses (R1-R12) have different shapes compared to each other.

5. An arrangement according to any of claims 1-4, wherein at least some of said recesses (R1-R12) have an upwardly widening configuration.

6. An arrangement according to any of claims 1-5, wherein said visor (10; 110) has a comparatively even thickness (T1; T2) in the range of 1 up to several centimetres, and wherein said diffuser portions (D1; D2) have dimensions in comparatively the same range and wherein the distance between the respective diffuser portions (D1; D2) are in comparatively the same range.

7. A vehicle (1) comprising an arrangement (A1; A2) according to any of claims 1-6.

## Patentansprüche

1. Anordnung (A1; A2) mit einer Sonnenblende (10; 110), wobei die Sonnenblende (10; 110) dazu eingerichtet ist, an einem Fahrzeug (1) angeordnet zu werden, wobei die Sonnenblende (10; 110) eine Vorderseite (10a, 110a), die so angeordnet ist, dass sie von dem Fahrzeug weg zeigt, und eine Rückseite (10b; 110b) hat, die dem Fahrzeug (1) zugewandt ist, wobei die Sonnenblende (10; 110) so angeordnet ist, dass sie an einem oberen Abschnitt (2a) des Fahrzeugs (1) in Verbindung mit der Windschutzscheibe (3) des Fahrzeugs (1) so angebracht werden kann, dass Luft (F1, F2) an den Sonnenblendenseiten (10a; 110a, 10b; 110b) und somit zwischen der Sonnenblende (10; 110) und dem Fahrzeug vorbeiströmen kann, wobei die Anordnung Mittel zum Reduzieren von Geräusch umfasst, das durch den Luftstrom (F1, F2) verursacht wird, **dadurch gekennzeichnet, dass** die Mittel zum Reduzieren von Geräusch einen Satz (D1; D2) von Diffusorabschnitten (R1-R12; P1-P9) umfassen, die entlang mindestens einer der Sonnenblendenseiten (10a; 110a, 10b; 110b) angeordnet sind, um eine Inkohärenz des Luftstroms (F1, F2) und folglich eine Geräuschreduktion zu erzeugen, wobei der Satz (D1; D2) von Diffusorabschnitten (R1-R12; P1-P9) Diffusorabschnitte umfasst, die Vertiefungen (R1-R12) in einer Sonnenblendenseite sind, und die Vertiefungen (R1-R12) nach oben offen sind, wobei der Satz von Diffusorabschnitten (R1-R12; P1-P9) entlang der Rückseite (10b; 110b) der Sonnenblende (10; 110) angeordnet ist und mindestens einige der Vertiefungen (R1-R12) in unterschiedlichen Abständen relativ zueinander entlang der Sonnenblende (10) angeordnet sind.

2. Anordnung nach Anspruch 1, wobei der Satz (D1; D2) von Diffusorabschnitten (R1-R12; P1-P9) entlang eines oberen Abschnitts (12a) der Rückseite des Visiers angeordnet ist.

3. Anordnung nach einem der Ansprüche 1 bis 2, wobei die Sonnenblende (10; 110) dazu angeordnet ist, über mindestens zwei Befestigungselemente (22, 24, 26; 122, 124) angebracht zu werden, die in seitlicher Richtung des Fahrzeugs (1) in einem Abstand voneinander angeordnet sind, wobei der Satz (D1; D2) von Diffusorabschnitten (R1-R12; P1-P9) zwischen den Befestigungselementen (22, 24, 26; 122, 124) angeordnet ist.

4. Anordnung nach Anspruch 1 bis 3, wobei zumindest einige der Vertiefungen (R1-R12) im Vergleich zueinander unterschiedliche Formen aufweisen.

5. Anordnung nach einem der Ansprüche 1 bis 4, wobei zumindest einige der Vertiefungen (R1-R12) eine sich nach oben erweiternde Konfiguration aufweisen.

6. Anordnung nach einem der Ansprüche 1 bis 5, wobei die Sonnenblende (10; 110) eine vergleichsweise gleichmäßige Dicke (T1; T2) im Bereich von 1 bis zu mehreren Zentimetern aufweist, und wobei die Diffusorabschnitte (D1; D2) Abmessungen in vergleichsweise demselben Bereich aufweisen und wobei der Abstand zwischen den jeweiligen Diffusorabschnitten (D1; D2) in vergleichsweise demselben Bereich liegt.

7. Fahrzeug (1), umfassend eine Anordnung (A1; A2) nach einem der Ansprüche 1 bis 6.

## Revendications

1. Agencement (A1 ; A2) avec une visière (10 ; 110), ladite visière (10 ; 110) étant configurée pour être agencée sur un véhicule (1), ladite visière (10 ; 110) ayant un côté avant (10a, 110a) agencé pour être tourné à l'opposé du véhicule et un côté arrière (10b ; 110b) faisant face au véhicule (1), ladite visière (10 ; 110) étant agencée pour être montée sur une partie supérieure (2a) du véhicule (1) en raccordement avec le pare-brise (3) du véhicule (1) de sorte que l'air (F1, F2) peut s'écouler au-delà desdits côtés de visière (10a ; 110a, 10b ; 110b) et donc entre la visière (10 ; 110) et le véhicule, ledit agencement comprenant un moyen pour réduire le bruit provoqué par ledit écoulement d'air (F1, F2), **caractérisé en ce que** ledit moyen pour réduire le bruit comprend un ensemble (D1 ; D2) de parties de diffuseur (R1-R12 ; P1-P9) agencé le long d'au moins l'un desdits côtés de visière (10a ; 110a, 10b ; 110b) de manière à créer une incohérence dudit écoulement d'air (F1, F2) et par conséquent une réduction de bruit, dans lequel ledit ensemble (D1 ; D2) de parties de diffuseur (R1-R12 ; P1-P9) comprend des parties de diffuseur qui sont des évidements (R1-R12) dans un côté de visière et lesdits évidements (R1-R12) sont ouverts vers le haut, dans lequel ledit ensemble de parties de diffuseur (R1-R12 ; P1-P9) sont agencés le long dudit côté arrière (10b ; 110b) de ladite visière (10 ; 110) et au moins certains desdits évidements (R1-R12) sont agencés à des distances différentes les uns des autres le long de ladite visière (10).

2. Agencement selon la revendication 1, dans lequel ledit ensemble (D1 ; D2) de parties de diffuseur (R1-R12 ; P1-P9) est agencé le long d'une partie supérieure (12a) dudit côté arrière de ladite visière.

3. Agencement selon l'une quelconque des revendications 1 et 2, dans lequel ladite visière (10 ; 110) est agencée pour être montée par l'intermédiaire d'au moins deux éléments de fixation (22, 24, 26 ; 122, 124) agencés à une distance l'un de l'autre dans la direction latérale du véhicule (1), dans lequel ledit ensemble (D1 ; D2) de parties de diffuseur (R1-R12 ; P1-P9) est agencé entre lesdits éléments de fixation (22, 24, 26 ; 122, 124).

4. Agencement selon les revendications 1 à 3, dans lequel au moins certains desdits évidements (R1-R12) ont des formes différentes les unes des autres.

5. Agencement selon l'une quelconque des revendications 1 à 4, dans lequel au moins certains desdits évidements (R1-R12) ont une configuration s'élargissant vers le haut.

6. Agencement selon l'une quelconque des revendications 1 à 5, dans lequel ladite visière (10 ; 110) a une épaisseur comparativement régulière (T1 ; T2) dans la plage de 1 à plusieurs centimètres, et dans lequel lesdites parties de diffuseur (D1 ; D2) ont des dimensions dans la même plage comparativement et dans lequel la distance entre les parties de diffuseur respectives (D1 ; D2) est dans la même plage comparativement.

7. Véhicule (1) comprenant un agencement (A1 ; A2) selon l'une quelconque des revendications 1 à 6.
